# FASCICULE DE BREVET EUROPEEN

(11) **EP 0 743 489 B1**
(45) Date de publication et mention de la délivrance du brevet: **28.07.1999**
(21) Numéro de dépôt: 96401089.6
(22) Date de dépôt: 17.05.1996
(51) Int. Cl.: F23K 5/00, B23K 7/10, G05D 16/06, F16L 11/12, F16L 39/02

(54) **Installation d'alimentation en gaz, équipement de mise en oeuvre d'une flamme la comportant, et détendeur correspondant**
Gaszufuhreinrichtung, Vorrichtung zur Erzeugung einer Flamme die diese Einrichtung enthält und Druckminderer dafür
Gas feeding installation, flame generating equipment comprising this installation and corresponding pressure reducing device

(30) Priorité: 18.05.1995 FR 9505923
(43) Date de publication de la demande: 20.11.1996
(73) Titulaire: SOUDURE AUTOGENE FRANCAISE, 75507 Paris (FR)
(72) Inventeur: Cannet, Gilles, 95620 Parmain (FR)
(74) Mandataire: Le Moenner, Gabriel

(56) Documents cités:
- DE-A- 2 439 216
- GB-A- 1 197 447
- GB-A- 2 146 758
- US-A- 3 228 452
- US-A- 3 481 363

## Description

La présente invention concerne une installation d'alimentation en gaz, du type décrit dans le préambule de la revendication 1.

L'invention concerne également un équipement de mise en oeuvre d'une flamme comprenant au moins une telle installation.

Une installation selon le préambule de la revendication 1 est décrite dans le document US-A-3228452, où la canalisation d'amenée du gaz de sécurité est pourvue d'un clapet de surpression pour mise à l'air libre de l'espace inter-parois en cas de rupture de la conduite d'alimentation sous haute pression.

De telles installations d'alimentation en gaz, trouvent leur application par exemple sur les chantiers de chaudronnerie pour l'alimentation d'un chalumeau. Dans celles-ci, un chalumeau manuel de chauffe est relié par l'intermédiaire de deux conduites d'alimentation distinctes à des bouteilles de stockage de gaz combustible, par exemple de l'acétylène, et de gaz comburant, généralement de l'oxygène. Des détendeurs sont disposés aux sorties de bouteilles de stockage, afin de permettre le réglage de la pression de sortie de ces deux gaz en vue de l'alimentation du chalumeau.
Les conduites d'alimentation de ces deux gaz présentent généralement des longueurs relativement importantes afin de permettre à l'utilisateur de s'éloigner des bouteilles de stockage. Les conditions de travail sur les chantiers de construction exposent ces conduites à des risques de détérioration, par exemple de déchirure. Dans ce cas, les fuites de gaz en résultant peuvent être dangereuses. L'absence de moyens d'arrêt de l'écoulement issu des bouteilles de stockage depuis le lieu d'utilisation du chalumeau rend difficile l'arrêt immédiat de la fuite. De plus, la fuite peut ne pas être immédiatement détectée et une inflammation du gaz combustible libéré de la conduite endommagée est alors à craindre.

Par ailleurs, cas d'évacuation d'urgence de la zone de travail, l'opérateur utilisant le chalumeau n'est pas en mesure, depuis le lieu où il travaille de fermer les bouteilles de gaz combustible et comburant. Pour ce faire, en effet, il est obligé de se rendre auprès de chaque bouteille et de fermer manuellement le robinet d'arrêt associé. Cette opération est longue et l'opérateur parfois préoccupé par l'évacuation d'urgence oublie de procéder à la fermeture de chacune des bouteilles. L'installation sans surveillance présente alors des risques d'incendie ou d'explosion.

L'invention a pour but de remédier à ces inconvénients et, en particulier, elle a pour but de fournir une installation d'alimentation en gaz, notamment pour la mise en oeuvre d'une flamme, permettant l'arrêt automatique des gaz d'alimentation au niveau de la source d'alimentation, et ce depuis différents points de l'installation, l'arrêt des gaz d'alimentation s'effectuant par ailleurs automatiquement en cas de détérioration même superficielle de l'une des conduites d'alimentation.

A cet effet, l'invention a pour objet une installation d'alimentation en gaz, du type précité, caractérisée en ce qu'elle comporte les caractéristiques de la partie caractérisante de la revendication 1.

D'autres caractéristiques de l'invention sont décrites dans les revendications 2 à 22.

L'invention sera mieux comprise à la lecture de la description qui va suivre, donnée uniquement à titre d'exemple et faite en se référant aux dessins sur lesquels :
- la figure 1 est une vue schématique d'un premier mode de réalisation d'une installation de mise en oeuvre d'une flamme selon l'invention ;
- la figure 2 est une vue en section, suivant la ligne II-II de la figure 1, du faisceau d'alimentation en gaz de cette figure 1 ;
- la figure 3 est une vue en coupe longitudinale d'une vanne d'arrêt pneumatique utilisée dans l'installation de la figure 1 ;
- les figures 4 et 5 sont des vues en coupe longitudinale de deux modes de réalisation différents de détendeurs à réglage manuel et arrêt pneumatique utilisables dans l'installation de la figure 1 ;
- la figure 6 est une vue en coupe longitudinale d'un raccord d'extrémité du faisceau d'alimentation de la figure 1 ;
- la figure 7 est une vue schématique d'un second mode de réalisation d'une installation de mise en oeuvre d'une flamme selon l'invention ;
- la figure 8 est une vue en section, suivant la ligne VIII-VIII de la figure 7, du faisceau d'alimentation en gaz de cette figure 7 ;
- la figure 9 est une vue en coupe longitudinale d'un détendeur à arrêt et réglage pneumatiques utilisé dans l'installation de la figure 7 ;
- la figure 10 est une vue schématique d'un dispositif de pressurisation automatique de l'espace inter-parois de l'installation selon l'invention, muni en outre d'un dispositif de compensation de fuites ; et
- la figure 11 est une vue en coupe longitudinale d'un raccord rapide pour le faisceau d'alimentation.

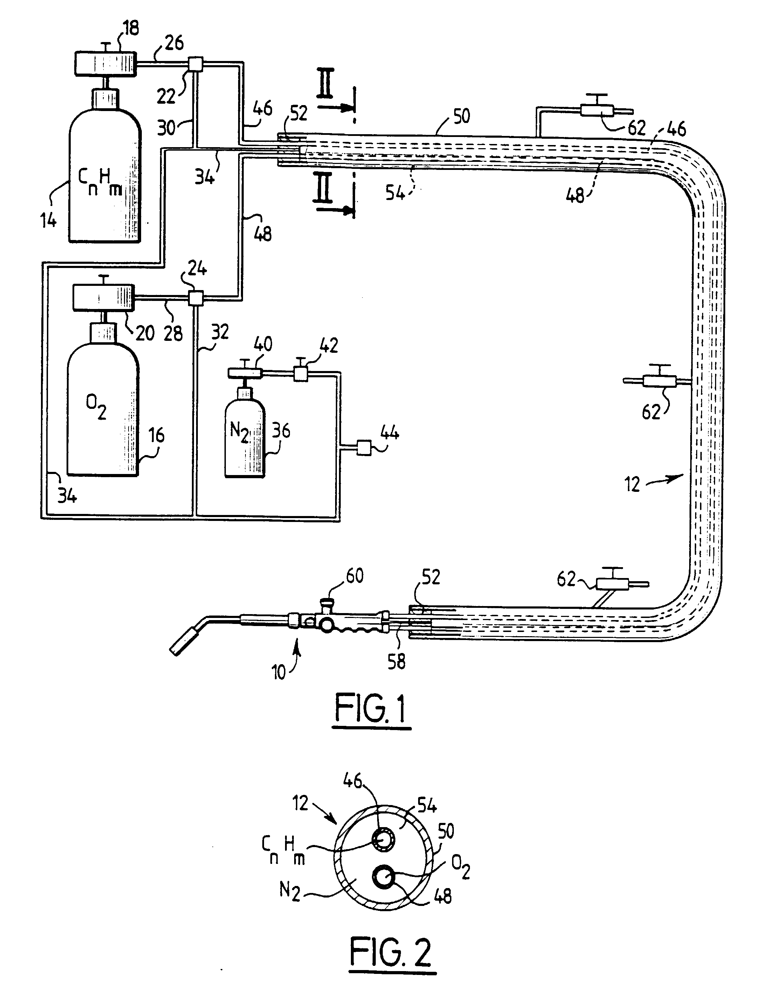

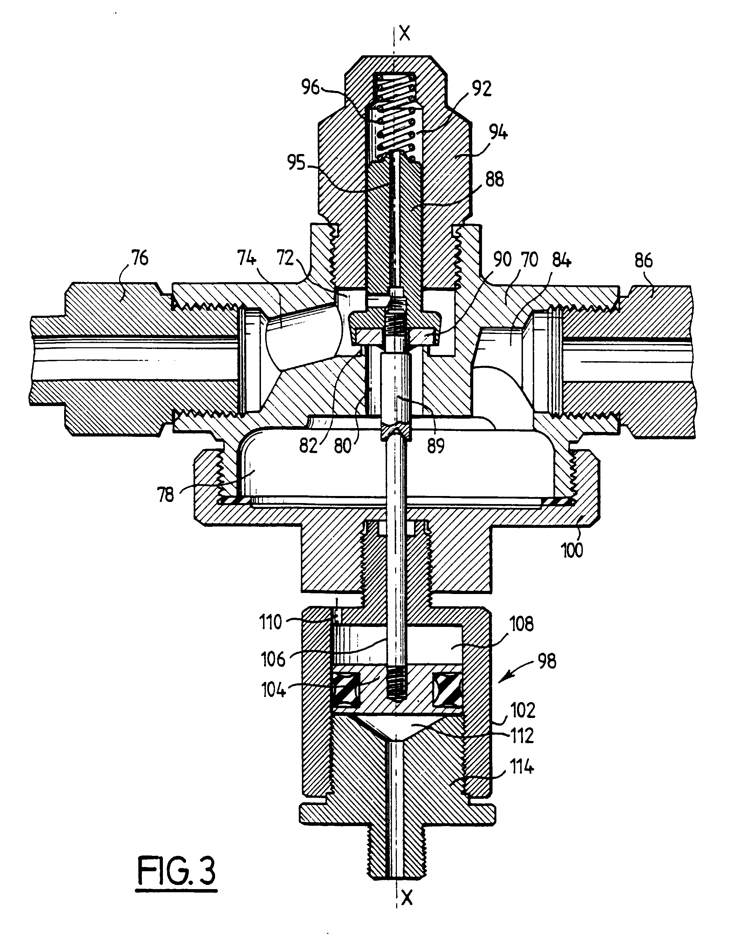

Sur la figure 1, on a représenté une installation de mise en oeuvre d'une flamme à partir d'un chalumeau d'extrémité 10. Ce chalumeau est alimenté par une installation d'alimentation en gaz comportant un faisceau 12 qui comprend des conduites d'alimentation reliées respectivement à des bouteilles de stockage de gaz combustible 14 et de gaz comburant 16. Chaque bouteille de stockage de gaz comporte en sortie un détendeur à réglage manuel de type classique, noté respectivement 18 et 20. La sortie de chaque détendeur est reliée à l'entrée d'une vanne d'arrêt pneumatique 22, 24, par une conduite de liaison 26, 28 de longueur minimale. Un exemple de réalisation d'une telle vanne d'arrêt pneumatique sera décrit en regard de la figure 3.

Les entrées de commande des vannes d'arrêt pneumatique 22, 24 sont reliées par des conduites de commande 30, 32 à une conduite de sécurité 34. Cette dernière est reliée à la sortie d'une bouteille 36 de stockage d'un gaz de sécurité sous pression, notamment inerte, de l'azote par exemple. Un détendeur 40 est prévu à la sortie de la bouteille 36. En aval de celui-ci est disposée une vanne de remplissage 42 de type classique permettant de mettre en communication la bouteille 36 et la conduite de sécurité 34.

Sur la conduite de sécurité 34 est piqué un clapet 44 de mise à l'air. Il est maintenu obturé au repos par un lien en matériau fusible.

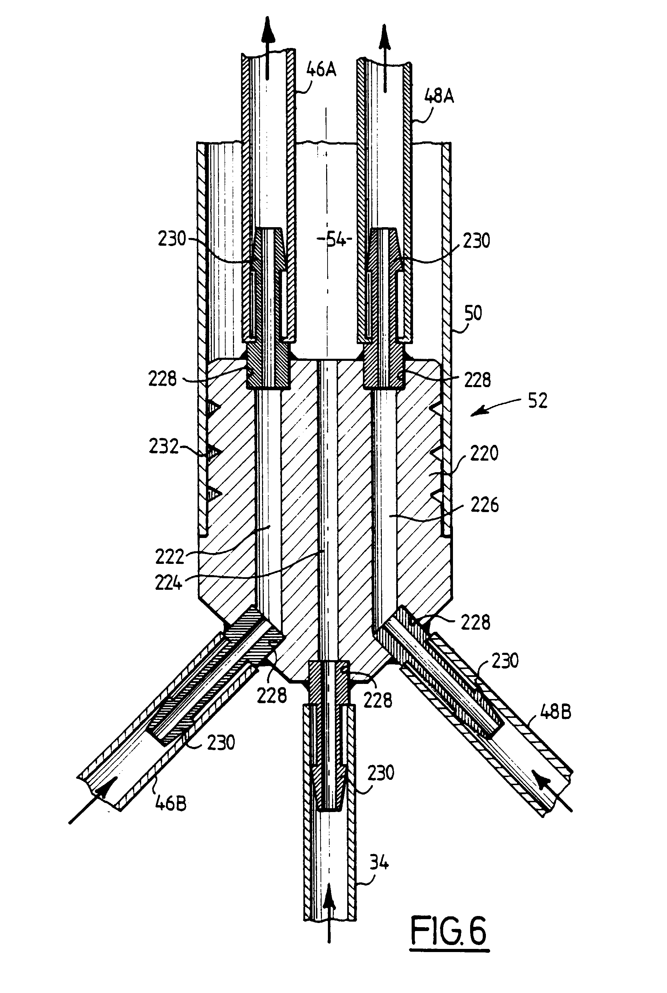

Les sorties des vannes d'arrêt pneumatique 22 et 24 sont reliées à des conduites 46, 48 d'alimentation respectivement en acétylène et en oxygène. Ces conduites 46, 48, formées par des tuyaux souples, se prolongent à l'intérieur du faisceau d'alimentation 12. Elles sont reçues, sur la presque totalité de leur longueur, dans une gaine étanche 50 formée d'un tuyau souple de plus grand diamètre. A chaque extrémité, la gaine 50 est obturée par un raccord étanche 52, qui sera décrit en détail en regard de la figure 6. Les conduites d'alimentation 46 et 48 pénètrent et ressortent de la gaine 50 au travers des raccords 52. La gaine 50 délimite ainsi avec la paroi des conduites 46, 48 et les raccords 52 un espace inter-parois 54 hermétiquement clos. Par ailleurs, l'extrémité de la conduite de sécurité 34 est reliée par l'intermédiaire du raccord arrière 52 à l'espace interparois 54.

A l'avant de la gaine 50, c'est-à-dire à son extrémité proche du chalumeau 10, le raccord 52 relie par l'intermédiaire d'une conduite de sécurité avant 58 l'espace inter-parois 54 à une vanne 60 de mise à l'air. La vanne 60 est solidaire du chalumeau 10. Les conduites d'alimentation 46 et 48 ressortent de la gaine 50 au travers du raccord avant 52 et sont raccordées au chalumeau 10 de manière classique en vue de son alimentation.

Des vannes de mise à l'air 62 sont piquées directement en différents points de la gaine 50. Elles permettent la mise à l'air de l'espace inter-parois 54, par simple pression manuelle sur celles-ci.

Sur la figure 2, on a représenté une section du faisceau d'alimentation 12. Sur cette figure, les conduites d'alimentation 46 et 48 s'étendent à l'intérieur de la gaine 50, et définissent ainsi ensemble l'espace inter-parois 54 qui est relié à l'une des extrémités de la gaine 50 à la bouteille 36 de stockage d'azote et à l'autre extrémité à la vanne de mise à l'air 60. L'espace inter-parois 54 définit avec les conduites de sécurité 34, 58 et les conduits de commande 30, 32 un circuit de sécurité.

Afin d'utiliser l'installation, les vannes de mise à l'air 60 et 62 étant fermées, l'opérateur ouvre la vanne de remplissage 42 du circuit de sécurité. L'azote sous pression, détendu dans le détendeur 40, circule dans la conduite de sécurité 34 et actionne les vannes d'arrêt pneumatique 22 et 24 pour provoquer leur ouverture. Par ailleurs, la conduite de sécurité 34 achemine l'azote sous pression dans l'espace inter-parois 54. Les conduites d'alimentation 46 et 48 logées dans la gaine 50 sont ainsi maintenues dans une enveloppe d'azote sous pression à une pression supérieure à celle du milieu ambiant.

Lorsque le circuit de sécurité est complètement empli d'azote et que les vannes d'arrêt pneumatique 22 et 24 sont ouvertes, la vanne de remplissage 42 est fermée.

Afin de procéder à l'allumage du chalumeau, l'opérateur règle la pression de l'acétylène et de l'oxygène issus des bouteilles de stockage 14 et 16 par ajustement des détendeurs 18 et 20. Les vannes d'arrêt pneumatique 22, 24 étant ouvertes, la circulation des gaz est établie jusqu'au chalumeau 10. La flamme peut alors être allumée.

La longueur, supposée importante, du faisceau d'alimentation 12 permet à l'opérateur de travailler avec le chalumeau en étant éloigné des bouteilles 14 et 16. En vue d'interrompre son travail, notamment lors d'une situation d'urgence obligeant à arrêter la circulation des gaz dans le faisceau 12, l'opérateur ouvre l'une des vannes de mise à l'air 60 ou 62 disposées respectivement sur le chalumeau et en certains points du faisceau 12. L'ouverture de l'une de ces vannes conduit à l'échappement vers le milieu ambiant de l'azote sous pression contenu dans l'espace inter-parois 54. Il s'ensuit une chute de pression dans l'ensemble du circuit de sécurité et en particulier dans la conduite de sécurité 34. Cette chute de pression provoque la fermeture des vannes d'arrêt pneumatique 22 et 24. Ainsi, la circulation de l'acétylène et de l'oxygène depuis les bouteilles de stockage 14 et 16 est stoppée à la sortie de celles-ci. Il n'est alors plus nécessaire pour l'opérateur de se rendre auprès des bouteilles de stockage 14 et 16 pour actionner leur robinet d'arrêt.

De même, si le faisceau d'alimentation 12 est endommagé, et est partiellement entaillé, une fuite d'azote se produit à l'endroit de l'entaille sur la gaine 50. La chute de la pression d'azote qui en résulte provoque, comme précédemment, la fermeture des vannes d'arrêt pneumatique 22, 24 et fait ainsi cesser la circulation des gaz.

Comme cela est représenté sur la figure 2, les conduites d'alimentation en acétylène et en oxygène étant reçues à l'intérieur de la gaine 50, en cas de détérioration du faisceau 12 par un agent extérieur, un engin de chantier roulant dessus par exemple, la gaine 50 est endommagée et entaillée avant que les conduits d'alimentation 46 et 48 ne soient gravement endommagés. Ainsi l'alimentation des gaz est stoppée dès que l'une des conduites est endommagée, puisque la gaine 50 a alors elle-même été préalablement entaillée.

En outre, si un incendie se déclare dans le local où se trouvent les bouteilles de stockage 14, 16, 36, la chaleur en résultant provoque la fonte du lien fusible maintenant fermé le clapet de mise à l'air 44. L'azote s'échappe alors par celui-ci et les vannes d'arrêt pneumatique 22 et 24 se ferment.

Sur la figure 3, on a représenté un exemple de mode de réalisation d'une vanne d'arrêt pneumatique correspondant à l'une des vannes d'arrêt pneumatique 22 ou 24 de la figure 1.

La vanne d'arrêt pneumatique représentée comporte un corps de vanne 70 d'axe X-X dans lequel est définie une chambre d'entrée 72 axiale reliée par un conduit 74 à un raccord d'entrée 76. Cette entrée est adaptée pour recevoir du gaz provenant d'un détendeur d'une bouteille sous pression.

La chambre d'entrée 72 est reliée à une chambre de sortie 78 ménagée dans le corps de vanne 70 par un passage de liaison 80 d'axe X-X. L'extrémité de ce dernier débouche dans la chambre d'entrée 72 et est entourée par un rebord périphérique 82 formant siège. La chambre de sortie 78 est reliée par un conduit de sortie 84 à un raccord de sortie 86 adapté pour recevoir une extrémité d'une conduite d'alimentation. Un bouchon obturateur 88 formant clapet et de forme générale cylindrique est disposé suivant l'axe X-X. Il porte à son extrémité située en regard du passage 80 un joint d'étanchéité 90. Ce bouchon est partiellement reçu à coulissement dans un trou borgne 92 d'un culot 94, et son extrémité portant le joint 90 s'étendant dans la chambre d'entrée 72. L'extrémité ouverte filetée du culot 94 est vissée à l'extrémité de la chambre d'entrée 72. Par ailleurs, le bouchon 88 est traversé par un conduit de compensation 95 reliant le fond du trou borgne 92 à la chambre 72. Un ressort hélicoïdal 96 prend appui sur le fond du trou borgne 92 et sur une extrémité du bouchon obturateur 88 pour repousser celui-ci contre le siège de vanne formé par le rebord 82.

Suivant l'axe X-X, à l'extrémité de la chambre de sortie 78 est disposé un vérin d'actionnement 98 relié par vissage au corps de vanne 70 par une pièce d'accouplement 100 taraudée.

Le vérin 98 comporte un corps de vérin 102 dont l'extrémité avant est filetée et est reçue suivant l'axe X-X dans un contre-alésage taraudé de la pièce 100. Un piston 104 est monté mobile dans le corps 102. Il est prolongé par une tige d'actionnement 106 traversant la chambre de sortie 78, et dont l'extrémité libre est en contact avec un appendice 89 solidaire du bouchon obturateur 88 et traversant le passage 80. La chambre avant 108 du vérin est en communication avec le milieu ambiant par un passage 110. La chambre arrière 112 est reliée par un raccord 114 à une conduite de commande. Ce raccord 114 constitue ainsi l'entrée de commande de la vanne d'arrêt pneumatique.

En l'absence de gaz sous pression dans la chambre arrière 112, le bouchon d'obturation 88 est plaqué contre le siège de vanne 82 sous l'effet de la poussée du ressort 96. Ainsi, la vanne est en position fermée et toute circulation est impossible entre les chambres d'entrée 72 et de sortie 78. Lorsque la pression augmente dans la chambre arrière 112, ce qui correspond à la mise sous pression du circuit de sécurité, le piston 104 et la tige 106 sont déplacés et repoussent le bouchon obturateur 88 à l'encontre de l'effet du ressort 96. L'écoulement du gaz est alors possible depuis la chambre d'entrée 72 vers la chambre de sortie 78 de la vanne.

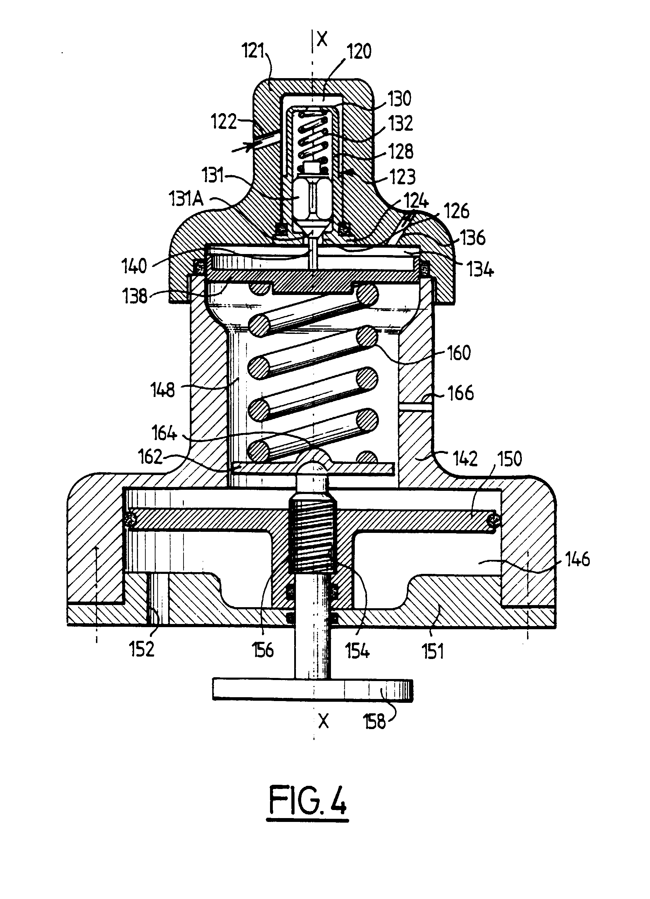

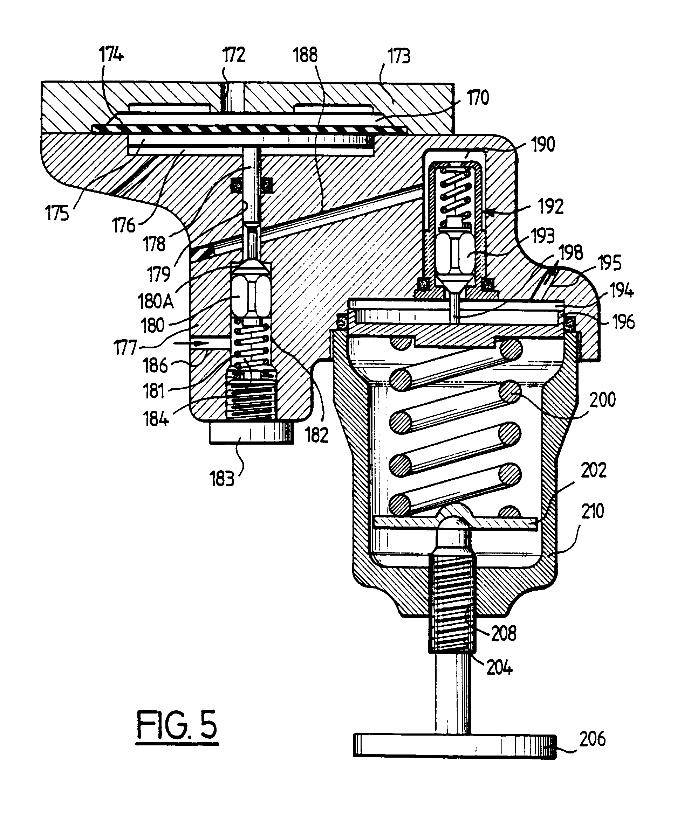

Sur les figures 4 et 5 sont représentés deux modes différents de réalisation d'un détendeur à réglage manuel et arrêt pneumatique. Ces derniers sont adaptés pour être mis en oeuvre dans l'installation de la figure 1. Chacun d'eux remplace l'ensemble formé d'un détendeur réglable 18 ou 20 et d'une vanne d'arrêt pneumatique 22 ou 24.

Sur la figure 4, le détendeur à réglage manuel et arrêt pneumatique comporte une chambre d'entrée 120 pour le gaz sous une haute pression provenant d'une bouteille de stockage. La chambre 120 est formée par un évidement d'axe X-X d'un corps de détente 121 en forme de cloche. Un conduit d'entrée 122 relie la chambre d'entrée 120 à la bouteille de stockage.

Un ensemble de détente 123 est disposé dans la chambre d'entrée 120. Celui-ci comporte une paroi d'obturation 124 munie d'un perçage central 126 délimitant un siège. Cette paroi est prolongée à l'intérieur de la chambre 120 par une jupe 128 dont l'extrémité présente des rebords rentrants 130. A l'intérieur de cette jupe sont disposés, depuis le perçage 126, un pointeau d'obturation 131 formant clapet, chargé vers le perçage 126 par un ressort hélicoïdal 132 prenant appui sur le rebord 130. Le pointeau d'obturation 131 comporte, à son extrémité en regard du perçage 126, une garniture d'étanchéité 131A. L'ensemble de détente 123 est introduit dans la chambre d'entrée 120 de telle sorte que la paroi d'obturation 124 isole celle-ci d'une chambre de sortie 134 formée à l'extrémité évasée ouverte du corps de détente 121 en cloche. Cette chambre de sortie 134 forme une chambre de sortie du gaz sous une basse pression obtenu après la détente. Elle est reliée par un conduit de sortie 136 à une conduite d'alimentation telle que les conduites d'alimentation 46 ou 48.

La chambre 134 est délimitée par une paroi mobile 138 formant un piston sur laquelle s'appuie axialement un appendice 140 prolongeant le pointeau 131. L'appendice 140 s'étend ainsi au travers de la chambre 134 et du perçage 126. La chambre 134 peut être reliée à une soupape de sécurité limitant la pression en cas de fuite.

L'extrémité ouverte du corps de détente en cloche 121 comporte un taraudage de liaison avec un corps de commande 142 de révolution d'axe X-X. A l'intérieur du corps de commande 142 s'étend de l'autre côté de la paroi mobile 138 une chambre de commande 146. Entre ces deux chambres est disposée une chambre intermédiaire 148 séparée de la chambre de commande 146 par un piston mobile 150 formant une paroi mobile de la chambre 146. La chambre de commande 146 est obturée par un couvercle 151 dans lequel est ménagé un conduit de commande 152 adapté pour être relié à une conduite de commande.

Dans un trou traversant taraudé 154 du piston 150 est montée une tige filetée 156 de réglage dont une extrémité fait saillie dans la chambre intermédiaire 148 et dont l'autre extrémité fait saillie à l'extérieur du détendeur en traversant le couvercle 151. Cette dernière extrémité est munie d'une poignée d'actionnement 158. Un ressort hélicoïdal d'actionnement et de contrôle de la détente 160 est disposé axialement dans la chambre intermédiaire 148. Il a l'une de ses extrémités en appui sur la paroi mobile 138 et l'autre extrémité en appui sur un disque d'actionnement 162. Ce dernier présente une déformation centrale 164 définissant un creux dans lequel est reçue l'extrémité libre de la tige de réglage 156. Un passage 166 assure la communication de la chambre intermédiaire 148 avec le milieu ambiant.

Lorsque la chambre de commande 146 est emplie d'un gaz sous pression à partir du conduit de commande 152, le piston mobile 150 se déplace vers l'intérieur de la chambre intermédiaire 148. L'extrémité de la tige 156 agissant sur le disque 162 comprime le ressort 160, qui repousse la paroi mobile 138. Cette dernière, par l'intermédiaire de l'appendice 140, écarte le pointeau 131 à l'encontre de l'effet du ressort 132 de la paroi d'obturation 124. Ceci conduit à la circulation du gaz depuis la chambre d'entrée 120 vers la chambre de sortie 134. La détente du gaz est contrôlée par le ressort 160, dont la poussée est équilibrée par la pression du gaz dans la chambre de sortie 134. Ainsi, si la pression dans la chambre 134 est suffisante pour repousser la paroi 138 à l'encontre de l'effet du ressort 160, le pointeau 131 est repoussé par le ressort 132 vers la paroi d'obturation 124 obturant ainsi complètement ou partiellement le perçage 126, ce qui assure le contrôle de la détente du gaz.

Par ailleurs, le déplacement angulaire de la tige filetée 156 à partir de la poignée d'actionnement 158 permet de modifier la compression du ressort et ainsi de faire varier la position du pointeau 131 par rapport au perçage 126 ainsi que la pression nécessaire dans la chambre 134 pour vaincre l'effet du ressort. Ceci permet de régler le taux de détente du gaz.

Lorsque la surpression dans la chambre de commande 146 cesse, la paroi mobile 138 n'est plus soumise à l'action du ressort 160 et le pointeau 131 obture à nouveau le perçage 126 sous l'effet du ressort 132.

Sur la figure 5 est représenté un mode de réalisation différent d'un détendeur à réglage manuel et arrêt pneumatique. Ce dernier comporte, comme précédemment, une chambre de commande 170 reliée par un conduit de commande 172 à une conduite de commande telle que la conduite 30 ou 32. Cette chambre, formée dans un boîtier 173, est délimitée par une membrane d'étanchéité 174. Au-delà de cette dernière est disposé un piston 175. Ce piston est reçu mobile en translation dans un logement 176 ouvert sur le milieu ambiant d'un corps de détendeur 177. Une tige d'actionnement 178 solidaire axialement du piston 175 est reçue suivant un agencement étanche dans un passage 179 dans lequel elle est mobile en translation. Elle prend appui sur l'extrémité d'un pointeau d'arrêt formant clapet 180 muni d'une garniture d'étanchéité 180A à son extrémité et chargé par un ressort 181. Le pointeau et le ressort sont reçus dans un alésage 182 du corps de détendeur 177 prolongeant axialement le passage 179. L'alésage 182 a un diamètre supérieur à celui du passage 179 et est obturé par un bouchon 183 sur lequel prend appui le ressort 181. L'alésage 182 délimite ainsi une chambre d'entrée 184 dans laquelle débouche un conduit d'entrée 186 adapté pour le passage du gaz arrivant sous haute pression.

Un conduit de liaison 188 relie la sortie de la chambre d'entrée 186 obturable par le pointeau 180 à une chambre d'entrée secondaire 190 dans laquelle est disposé un ensemble de détente 192 analogue à l'ensemble 123 décrit en regard de la figure 4. Cet ensemble comporte en particulier un pointeau de détente 193. Comme dans le mode de réalisation précédent, une chambre de sortie 194 pour le gaz sous une basse pression prolonge la chambre d'entrée intermédiaire 190. Un conduit de sortie 195 est prévu pour relier la chambre de sortie 194 à une conduite d'alimentation. La chambre de sortie 194 est par ailleurs délimitée par une paroi mobile 196 sur laquelle s'appuie axialement un appendice 198 prolongeant le pointeau 193. La paroi mobile 196 est chargée par un ressort de contrôle de la détente 200 comprimé entre celle-ci et un disque d'actionnement 202 analogue au disque 162. Sur celui-ci prend appui une extrémité d'une tige filetée 204 munie, à son autre extrémité, d'une poignée d'actionnement 206. La tige filetée 204 est vissée dans un trou taraudé 208 d'un support 210 en forme de cloche dans lequel s'étend le ressort 200. Ce support en cloche 210 est vissé à son extrémité ouverte à l'extrémité taraudée de la chambre 194.

Dans ce mode de réalisation, lorsque la pression augmente dans la chambre de commande 170, la tige d'actionnement 178 repousse le pointeau d'arrêt 180. Le gaz sous une pression élevée arrivant depuis la chambre d'entrée 186 circule alors vers la chambre d'entrée secondaire 190 par le conduit de liaison 188. Sous l'effet du ressort 200, repoussé par la tige filetée 204, la paroi mobile 196 maintient par l'intermédiaire de l'appendice 198, le pointeau 193 écarté du perçage de l'ensemble de détente 123. Le gaz circule ainsi de la chambre d'entrée intermédiaire 190 vers la chambre de sortie 194. Le déplacement angulaire de la tige filetée 204 permet le réglage de la détente par ajustement de la position du pointeau de détente 193 dans l'ensemble de détente 123.

Comme dans le mode de réalisation précédent du détendeur, lorsque la pression dans la chambre de sortie 194 est suffisante pour vaincre la force du ressort 200, la paroi mobile 196 est repoussée. Ainsi, le pointeau 193 vient obturer totalement ou partiellement la sortie de la chambre d'entrée intermédiaire 190, réduisant ou stoppant la circulation de gaz vers la chambre de sortie 194, assurant ainsi le contrôle du taux de détente du gaz.

Lorsque la pression diminue dans la chambre de commande 170, le pointeau d'arrêt 180 obture la sortie de la chambre d'entrée 186 sous l'effet du ressort 181 qui n'est plus maintenu comprimé. La circulation du gaz cesse alors.

Sur la figure 6, a été représenté en coupe un exemple de réalisation du raccord d'extrémité 52. Ce dernier comporte un corps 220 de forme générale cylindrique et traversé de part en part par trois conduits de passage de gaz notés respectivement 222, 224, 226. Ces derniers à l'exception du conduit central 224 présentent à chacune de leurs extrémités un lamage 228 de réception d'une extrémité soudée d'un embout 230 de raccordement d'un tuyau souple d'alimentation. L'axe de ces embouts est à une extrémité du corps 220 décalé angulairement par rapport à l'axe des conduits 222 et 226. A cette extrémité, le conduit central 224 comporte lui aussi un lamage axial 228 de réception d'un embout 230.

Le corps 220 présente une extrémité opposée de diamètre réduit sur la paroi latérale de laquelle sont ménagées des gorges 232 de maintien de la gaine 50.

Afin de procéder à l'assemblage du faisceau d'alimentation 12, des portions intérieures 46A, 48A des conduits d'alimentation en acétylène 46 et en oxygène 48 respectivement sont emmanchées sur les embouts de raccordement 230 de l'extrémité du corps de diamètre réduit. La gaine de protection 50 est ensuite emmanchée sur cette extrémité. La gaine 50 peut être maintenue solidement sur le corps 220 par un collier à vis de tout type connu, non représenté. Des portions 46B, 48B des conduits d'alimentation en acétylène et en oxygène provenant des vannes d'arrêt pneumatique 22 et 24 par exemple sont emmanchées sur les embouts de raccordement extérieurs 230. De même, l'extrémité de la conduite de sécurité 34 d'amenée d'azote est reliée sur l'embout 230 du conduit central 224. Ainsi, la conduite de sécurité 34 est reliée à l'espace intérieur de la gaine 50. Le même raccord est utilisé à l'autre extrémité du faisceau 12 et des raccordements analogues sont effectués.

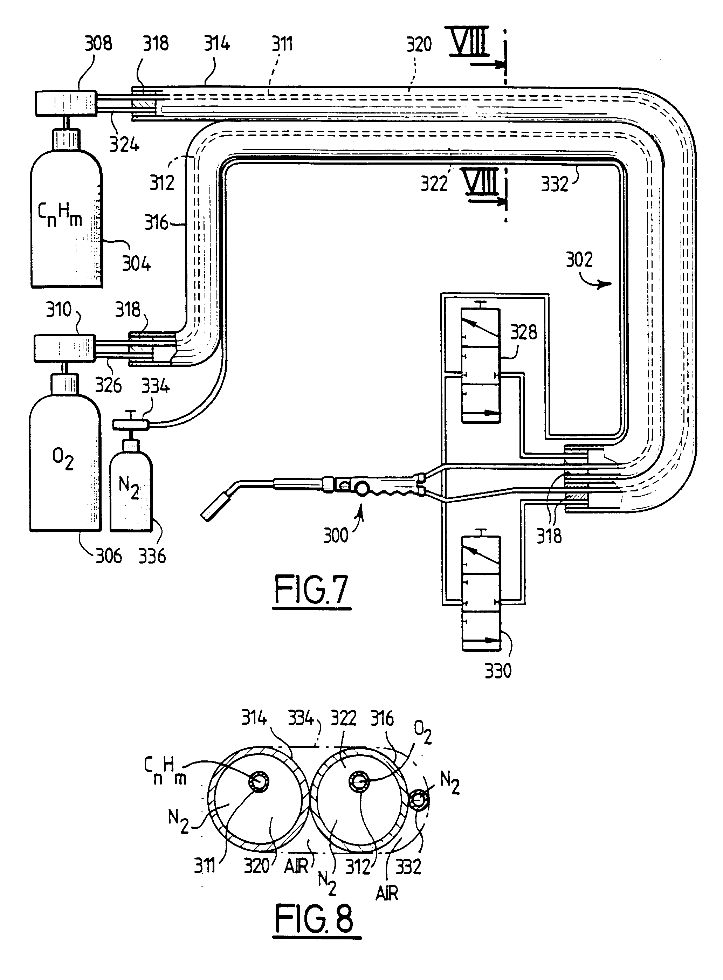

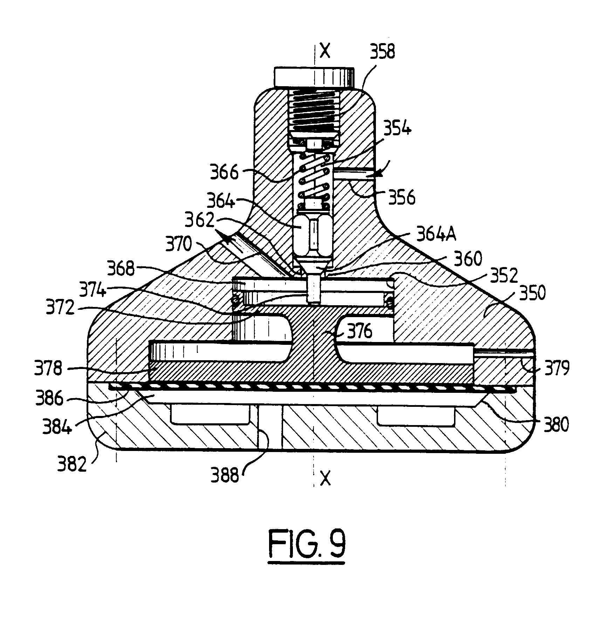

Sur la figure 7 a été représenté un autre mode de réalisation d'une installation de mise en oeuvre d'une flamme. Cette installation comporte, comme dans le mode de réalisation précédent, un chalumeau 300, un faisceau d'alimentation des gaz 302, une bouteille de stockage d'acétylène 304, et une bouteille de stockage d'oxygène 306. Chaque bouteille est munie à sa sortie d'un détendeur à arrêt et réglage pneumatiques 308, 310 dont un exemple de réalisation sera décrit en détail en regard de la figure 9.

Un tel détendeur à arrêt et réglage pneumatiques comporte une entrée de stockage, reliée à la bouteille d'alimentation, ainsi qu'une sortie d'alimentation reliée au faisceau 302. Il comporte en outre une entrée de commande reliée à une conduite d'amenée du gaz de commande. Un tel détendeur est adapté pour régler la pression de détente du détendeur en fonction de la pression du gaz à l'entrée de commande, et en particulier pour arrêter l'écoulement si cette pression est égale ou inférieure à la pression du milieu ambiant.

Comme cela est représenté sur la figure 7, la sortie d'alimentation de chacun des détendeurs 308, 310 est reliée, respectivement, à une conduite d'alimentation en acétylène 311 et en oxygène 312.

Ainsi que cela est représenté sur la figure 8 ces conduites d'alimentation 311, 312 sont sur la presque totalité de leur longueur reçues dans des gaines de protection étanches respectives, notées respectivement 314, 316. A l'autre extrémité du faisceau 302, les conduites d'alimentation 311 et 312 sont reliées de manière classique aux entrées du chalumeau 300. Les gaines 314 et 316 sont munies à leurs extrémités de raccords étanches et identiques 318. Ces raccords 318 sont de conception analogues au raccord 52, décrit en regard de la figure 6, mais ils comportent seulement deux entrées. Ils sont adaptés pour le passage des conduites d'alimentation 311, 312 à l'intérieur des gaines 314, 316. A l'une des extrémités, ils relient par ailleurs l'espace inter-parois 320, 322 délimité à l'intérieur de chacune des gaines 314, 316 à l'entrée de commande des détendeurs 308 et 310. Cette liaison s'effectue par des conduites de commande 324, 326, de longueur minimale.

A l'autre extrémité, les gaines 314, 316 sont munies de raccords d'extrémité 318 identiques, dont les sorties communiquant avec l'espace inter-parois 320, 322 sont reliées à un premier orifice de distributeurs 328, 330 de commande des détendeurs 308, 310. Les distributeurs 328 et 330 sont des distributeurs de type 3/3. Un second orifice de ceux-ci est relié à une conduite unique d'alimentation en gaz de sécurité 332, du faisceau 302. L'extrémité libre de la conduite 332 est reliée à un détendeur 334 d'une bouteille 336 de stockage d'azote sous pression. Le troisième orifice est ouvert directement sur le milieu ambiant. Les distributeurs sont adaptés pour mettre en communication sélectivement le premier orifice avec l'un des deux autres ou encore obturer celui-ci.

Les différents conduits du faisceau 302 sont regroupés, comme cela est indiqué sur la figure 8, dans une enveloppe souple 334 (non représentée sur la figure 7). Ainsi, dans cette enveloppe, sont disposées côte à côte la conduite 332 d'alimentation en gaz de sécurité ainsi que les gaines 314, 316 dans lesquelles sont reçues respectivement la conduite 311 d'alimentation en acétylène et la conduite 312 d'alimentation en oxygène.

Afin d'établir une flamme à l'extrémité du chalumeau 300, les robinets d'arrêt des bouteilles de stockage 304, 306 et 336 étant supposés ouverts, l'opérateur actionne les distributeurs de commande 328, 330 afin d'établir une pression d'azote dans les espaces inter-parois 320, 322. Ces pressions d'azote sont obtenues par mise en communication des espaces inter-parois 320, 322 avec la conduite 332 d'alimentation en gaz de sécurité. Ainsi l'azote sous pression commande les détendeurs à arrêt et réglage pneumatiques 308, 310 de telle sorte qu'une circulation d'acétylène et d'oxygène soit établie dans les conduites d'alimentation 310, 312.

Afin de procéder au réglage de la flamme, l'opérateur fait varier depuis les distributeurs de commande 328, 330 les pressions à l'intérieur des espaces inter-parois 320, 322 par ajout ou retrait d'azote. Lorsque la pression gazeuse doit être augmentée dans l'une des conduites d'alimentation 310, 312, l'opérateur actionne le distributeur de commande correspondant de telle sorte que de l'azote sous pression provenant de la conduite d'alimentation 302 en gaz de sécurité entre dans l'espace inter-parois associé. Cette augmentation de pression agit sur le détendeur associé, en augmentant la pression par diminution du taux de détente.

Si le débit d'un gaz doit être réduit, l'opérateur actionne le distributeur de commande 328, 330 associé afin de laisser s'écouler vers le milieu ambiant une fraction de l'azote sous pression contenu dans l'espace inter-parois. Cette diminution de pression agit sur le détendeur associé qui limite alors la pression de gaz.

En fonctionnement normal du chalumeau, c'est-a-dire en dehors des phases de réglage de celui-ci, les distributeurs de commande 328 et 330 interdisent toute circulation d'azote de la conduite 332 d'alimentation en gaz de sécurité vers ou depuis les espaces inter-parois 320, 322 ou encore des espaces inter-parois vers le milieu ambiant.

On comprend par ailleurs qu'en cas de rupture de l'une des gaines de protection 314, 316, conduisant à la libération d'une partie de l'azote contenu dans celle-ci, le gaz véhiculé par le conduit d'alimentation reçu dans cette gaine est progressivement stoppé par chute de la pression au niveau de l'entrée de commande du détendeur associé.

Suivant des modes particuliers de mise en oeuvre de ce second mode de réalisation, des vannes ou clapets de mise à l'air, analogues aux vannes 62 ou clapets 44, peuvent être prévues en différents points des gaines de protection 314 et 312, ainsi que de la conduite 302.

Sur la figure 9 est représenté un exemple de réalisation d'un détendeur à arrêt et réglage pneumatiques du type de ceux utilisés dans l'installation schématisée sur la figure 7 et portant les références 308 et 310.

Ce détendeur comporte un corps 350 de révolution d'axe X-X ayant un profil extérieur évasé. Il est traversé axialement de part en part par un alésage 352 à sections étagées croissantes. Depuis son extrémité de plus faible diamètre, cet alésage définit une chambre d'entrée 354 pour des gaz sous une pression élevée provenant d'un passage d'alimentation 356, raccordé à la sortie d'une bouteille de stockage 304 ou 306. La chambre 354 est délimitée à l'une de ses extrémités par un bouchon fileté 358 et, à son autre extrémité, par un diaphragme 360 muni d'un passage central de communication 362. A l'intérieur de cette chambre d'entrée 354 est disposé un pointeau de détente et d'arrêt 364 formant clapet muni à son extrémité d'une garniture d'étanchéité 364A et chargé par un ressort hélicoïdal 366. Ce dernier prend appui sur le bouchon 358.

Le passage 362 débouche dans une chambre de sortie 368 pour les gaz détendus sous une faible pression. Celle-ci a un diamètre supérieur à celui de la chambre d'entrée. Un passage de sortie 370 relie cette chambre 368 à une conduite d'alimentation 311 ou 312. La chambre de sortie 368 est délimitée dans l'alésage 352 par un piston étanche 372. Un appendice 374 disposé à l'extrémité du pointeau 364 traverse la chambre 368 et a son extrémité en appui sur le piston étanche 372. Le piston 372 est par ailleurs relié, par une tige 376 venue de matière, à une paroi mobile 378 d'actionnement. Cette dernière est mobile en translation dans l'alésage 352 à son extrémité de plus grand diamètre et a un diamètre supérieur à celui du piston 372. Un passage radial 379 de communication relie l'extrémité élargie de l'alésage 352 au milieu ambiant. La paroi mobile 378 délimite en outre avec un évidement 380 d'un couvercle 382 recouvrant l'extrémité de plus grand diamètre de l'alésage 352 une chambre de commande 384. Une membrane d'étanchéité 386 est disposée entre la paroi mobile 378 et le couvercle 382. Un passage d'alimentation 388 est par ailleurs ménagé dans le couvercle 382 et permet l'alimentation de la chambre de commande 384 depuis un conduit d'alimentation 324, 326 en gaz de sécurité.

Tel que représenté sur la figure 9, le détendeur à arrêt et réglage pneumatiques est dans une position d'obturation ou d'arrêt. Ainsi, le pointeau 364 est plaqué sous l'effet du ressort 366 contre le diaphragme 360 formant siège de vanne et obture le passage 362. La circulation est alors impossible entre la chambre d'entrée 354 et la chambre de sortie 368. Lorsque la pression dans la chambre de commande 384 augmente, la paroi mobile 378 est repoussée sous l'effet de la pression vers la chambre de sortie 368. Ainsi, le piston 372 par l'intermédiaire de l'appendice 374 repousse le pointeau 364 à l'encontre de l'effet du ressort 366. L'extrémité du pointeau se dégage alors du passage 362, ce qui permet le passage progressif du fluide de la chambre d'entrée 352 vers la chambre de sortie 368. En fonction de la pression régnant dans la chambre de commande 384 et de la pression régnant dans la chambre de sortie 368, le piston 376 est déplacé axialement. Ainsi, le pointeau 364 est plus ou moins éloigné du diaphragme 360, ce qui conduit à un réglage de la détente du gaz provenant de la chambre d'entrée 354. Dans ces conditions, le taux de détente du détendeur est proportionnel à la pression du gaz contenu dans la chambre de commande 384. Il correspond à l'équilibrage des forces appliquées sur le piston 372 par le gaz de la chambre 368 et sur la paroi mobile 378 par le gaz de la chambre 384.

La surface importante de la paroi mobile 378 par rapport à la surface du piston 372 permet un équilibrage des forces alors que la pression dans la chambre de commande 384 est inférieure à la pression dans la chambre de sortie 368.

Les deux modes de réalisation décrits ici en regard des figures 1 et 7 permettent de protéger l'installation des conséquences d'une rupture accidentelle due à des agents extérieurs de l'une ou l'autre des conduites d'alimentation en acétylène et en oxygène. Il est également possible de ne protéger que l'une des conduites, par exemple la conduite d'acétylène.

De plus, une telle installation d'alimentation en gaz peut être mise en oeuvre dans d'autres applications que celles présentées ici, et en particulier elle peut être utilisée pour d'autres gaz que l'acétylène et l'oxygène.

Ce type d'installation est particulièrement utile également pour l'acheminement de gaz de coût de production élevé vers des dispositifs utilisateurs. Ainsi, si une des conduites d'alimentation se trouve détériorée, l'alimentation en gaz est rapidement stoppée, ce qui conduit à une perte en gaz limitée.

Dans le cas d'une installation véhiculant deux gaz dont l'un est sans danger, ce gaz peut être utilisé pour assurer le gainage de la conduite véhiculant l'autre gaz.

Suivant une variante de réalisation, le gaz de sécurité peut être de l'air sous pression.

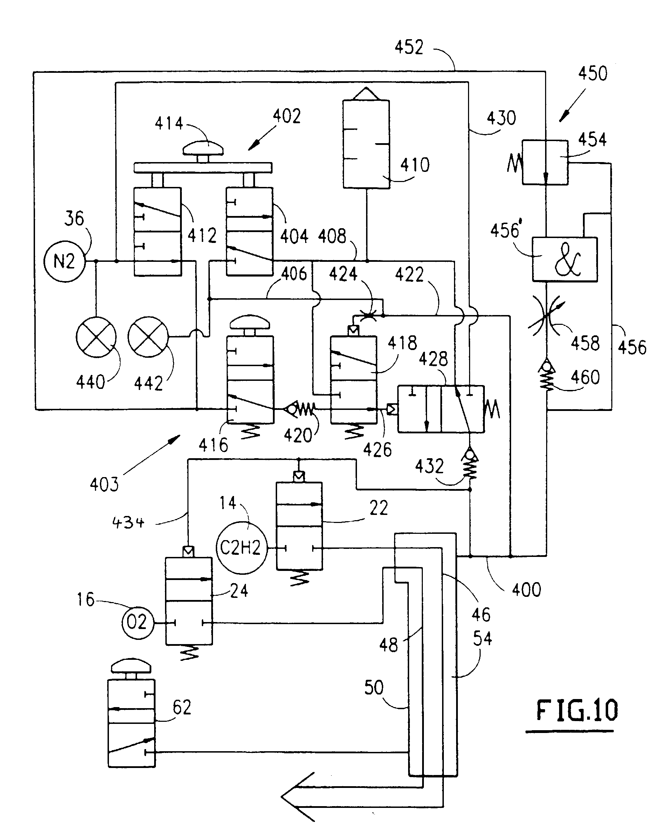

La figure 10 présente un dispositif automatique de pressurisation de l'espace inter-parois à une pression d'usage prédéterminée, et un dispositif de maintien de l'espace inter-parois à la pression d'usage prédéterminée. Ce dernier constitue un dispositif de compensation des fuites de la gaine.

On retrouve sur le schéma de la figure 1 les bouteilles de stockage de gaz combustible 14 et de gaz comburant 16, en aval desquelles sont disposées les vannes d'arrêt pneumatiques 22 et 24 respectivement. Les sorties des vannes d'arrêt pneumatiques 22 et 24 sont reliées aux conduites 46, 48 d'alimentation disposées à l'intérieur de la gaine 50. Une vanne de mise à l'air 62 est en outre représentée. L'espace inter-parois 54, délimité par la gaine 50, est alimenté en gaz de sécurité par une conduite de sécurité 400. Cette conduite de sécurité est alimentée depuis la source 36 de gaz de sécurité.

Le dispositif automatique de pressurisation comporte un organe d'arrêt général 402 assurant sélectivement à la fois la mise à l'air de l'espace inter-parois 54 et l'alimentation en gaz de sécurité de moyens automatiques de pressurisation 403. Cet organe d'arrêt général comporte une première vanne 404 normalement fermée, disposée sur une conduite de mise à l'air 406 de l'espace inter-parois. Cette dernière est piquée sur la conduite de sécurité 400. La sortie de la vanne 404 est reliée à une conduite de purge 408, ouverte sur le milieu ambiant et comportant en sortie un silencieux 410. L'organe d'arrêt général 402 comporte une seconde vanne 412 normalement ouverte. Les deux vannes 404 et 412 sont commandés par un même organe de commande 414. L'entrée de la vanne 412 est reliée directement à la source 36 de gaz de sécurité et sa sortie alimente les moyens automatiques de pressurisation 403.

Ces moyens automatiques de pressurisation comportent une vanne de pressurisation 416, formée par un distributeur 3/2 actionnable manuellement. Ce distributeur est monostable, normalement fermé, et est sollicité par un ressort, de sorte qu'une pression doit être exercée sur celui-ci, afin de rendre le distributeur passant. La sortie de la vanne de pressurisation 416 est reliée à un distributeur de régulation portant la référence 418. Ce distributeur est un distributeur monostable normalement ouvert de type 3/2 à tiroir et à actionnement pneumatique. Un clapet anti-retour 420 est interposé entre la sortie de la vanne de pressurisation 416 et l'entrée du distributeur 418.

Le distributeur 418 est normalement passant. Il est commandé par la pression régnant dans la conduite de sécurité 400 par l'intermédiaire d'une conduite de commande 422, piquée directement sur la conduite de sécurité 400, et qui alimente l'entrée de commande du distributeur 418 par l'intermédiaire d'un ajutage 424. Le distributeur 428 est chargé par un ressort dont la raideur est telle que le changement de position du distributeur nécessite l'application à son entrée de commande d'une pression égale ou supérieure à la pression d'usage prédéterminée pour l'espace inter-parois 54.

La seconde entrée du distributeur 418 est reliée à la ligne de purge 408 alors que la sortie est reliée par une conduite 426 à l'entrée de commande d'un distributeur d'arrêt 428.

Le distributeur 428 est un distributeur monostable de type 3/2 normalement fermé à tiroir et à actionnement pneumatique. Il assure la liaison sélective de la conduite de sécurité 400 avec une conduite 430 d'alimentation en gaz de sécurité piquée immédiatement en aval de la sortie de la source 36 de gaz de sécurité. La sortie du distributeur 428 est reliée, par l'intermédiaire d'un clapet 432, à la conduite de sécurité 400. Une conduite 434 de commande des vannes d'arrêt pneumatiques 22 et 24 est en outre connectée immédiatement en aval du clapet 432.

Le distributeur 428 assure la liaison sélective du clapet 432 à la sortie de la conduite d'alimentation 430, ou à la conduite de purge 408. En l'absence de pression à l'entrée de commande du distributeur 428, l'entrée du clapet 432 est reliée à la conduite de purge 408.

Un premier voyant pneumatique 440 est prévu immédiatement en sortie de la source 36 de gaz de sécurité, afin de permettre le contrôle de la présence de pression dans celle-ci. Un second voyant pneumatique 442 est prévu sur la conduite 406, afin de permettre le contrôle de la pression dans l'espace inter-parois 54.

Un dispositif 450 de maintien de l'espace inter-parois à la pression d'usage prédéterminée ou dispositif de compensation des fuites est en outre prévu entre la sortie de la vanne 412 et la conduite de sécurité 400. Ce dispositif 450 est ainsi alimenté par une conduite de compensation 452, piquée en amont de la vanne de pressurisation 416. Sur cette conduite 452 est disposée une soupape 454 de réglage de pression à commande pneumatique. Cette soupape est commandée par la pression régnant dans la conduite de sécurité 400 par un piquage 456. Cette soupape assure le passage du gaz uniquement si la pression dans le piquage 456 (pression de l'espace inter-parois) est inférieure à la pression d'usage.

A la sortie de cette soupape 454, est connectée une première entrée d'une cellule pneumatique ET portant la référence 456'. La seconde entrée de cette cellule est reliée directement au piquage 456. La sortie de la cellule pneumatique est reliée à la conduite 400 de sécurité par l'intermédiaire d'un limiteur de débit réglage 458 et un clapet 460. Cette cellule pneumatique est calibrée pour un déclenchement à des pressions supérieures à ladite pression prédéterminée dite de rupture. La cellule pneumatique ET est passante si la pression à ces deux entrées est supérieure à la pression de rupture. Cette pression de rupture est supérieure à la pression du milieu ambiant. Elle correspond à la pression maximale régnant dans l'espace inter-parois en cas de rupture de la gaine 50 ou de mise à l'air volontaire et qui ne peut être compensée par l'apport de gaz de sécurité depuis le dispositif de compensation 450.

Le fonctionnement du dispositif automatique de pressurisation et du dispositif de compensation des fuites va maintenant être décrit.

L'espace inter-parois 54 est supposé initialement être à la pression atmosphérique et la vanne de mise à l'air 62 est supposée être fermée. Dans la position représentée sur la figure 10, la vanne 404 isole la conduite de sécurité 400 de la conduite de purge 408, de sorte que la gaine 50 est hermétiquement étanche. Par ailleurs, la vanne 412 étant passante, la pression du gaz de sécurité issu de la source 36 se retrouve en entrée de la vanne de pressurisation 416 et à la première entrée de la cellule pneumatique 456. La seconde entrée de la cellule pneumatique ET étant à la pression du milieu ambiant, aucun gaz ne circule au travers du limiteur de débit 458. Dans ces conditions, le gaz de sécurité issu de la bouteille 36 n'est pas acheminé vers l'espace inter-parois 54.

Lors de l'enfoncement de la vanne de pressurisation 416, la conduite portant le clapet 420 est reliée à la sortie de la vanne 412, de sorte que, le distributeur 418 étant passant, la pression du gaz de sécurité est appliquée à l'entrée de commande du distributeur 428. Le tiroir de celui-ci est déplacé de sorte que la conduite 430 est reliée à la conduite de sécurité 400 par l'intermédiaire du clapet 432. La pressurisation de l'espace inter-parois 54 commence alors. La vanne de pressurisation 416 peut être relâchée, la pression à l'entrée de commande du distributeur 428 étant maintenue par le clapet 420.

La conduite de commande 422 applique à l'entrée de commande du distributeur 418 la pression régnant dans l'espace inter-parois 54. Ainsi, tant que la pression dans cet espace n'a pas atteint une valeur prédéterminée, susceptible de vaincre la force exercée par le ressort de rappel du distributeur 418, ce dernier reste passant. Lorsque la pression dans l'espace inter-parois 54 dépasse cette valeur prédéterminée correspondant à la pression d'usage, le distributeur 418 change de position, de sorte que l'entrée de commande du distributeur 428 est reliée à la conduite de purge 408. Il s'ensuit un changement d'état de celui-ci. La liaison entre la conduite d'alimentation 430 et la conduite de sécurité 400 est alors interrompue par la liaison de l'entrée du clapet 432 à la conduite de purge 408.

On comprend qu'il est ainsi possible, grâce aux moyens de pressurisation automatiques, d'établir une pression de valeur prédéterminée égale à la pression d'usage à l'intérieur de l'espace inter-parois 54 par simple enfoncement momentané de la vanne de pressurisation 416.

Si une fuite de faible importance se produit sur la gaine 50, due par exemple à la porosité de celle-ci ou à des fuites locales au niveau des raccords, le dispositif de compensation des fuites 450 agit de la manière suivante.

Les fuites sur la gaine 50 conduisent à une diminution lente de la pression à l'intérieur de la conduite de sécurité 400. En particulier, la pression chute faiblement à une valeur inférieure à la pression d'usage à l'entrée de commande de la soupape de régulation 454, de sorte que celle-ci relie l'entrée de la cellule pneumatique ET 456' à la conduite de compensation 452. Il s'ensuit une repressurisation de la gaine 50. Dès que la pression d'usage est atteinte, la soupape de régulation de pression 454 se ferme. Le conduit 456 agissant sur la soupape de régulation 454, assure ainsi une rétroaction garantissant une pression constante à l'intérieur de la gaine 50.

Si une déchirure importante a lieu sur la gaine 50, produisant une fuite importante et une chute rapide de la pression, la pression chute de manière importante à la seconde entrée de la cellule pneumatique 456', de sorte que, lorsque la pression est inférieure à la pression de rupture, la cellule se ferme interdisant toute repressurisation de la gaine à partir du gaz de sécurité issu de la conduite 452. Ainsi, les vannes pneumatiques 22 et 24 se ferment automatiquement malgré la présence du dispositif de compensation.

A la fin d'une cession d'utilisation de l'installation d'alimentation en gaz, l'opérateur inverse la position de l'organe d'arrêt général 402. Le distributeur 404 relie alors la conduite de mise à l'air 406 à la conduite de purge 408, ce qui provoque la dépressurisation de l'espace inter-parois 54 et la fermeture des vannes d'arrêt pneumatiques 22, 24. Par cette même opération d'actionnement de l'organe d'arrêt général, la position du distributeur 412 est inversée. La vanne de pressurisation 416 est alors isolée de la source 36 interdisant toute tentative de repressurisation de l'espace inter-parois 54.

On comprend que le dispositif automatique de pressurisation décrit ici permet à lui seul et en tant que tel de résoudre les problèmes de mise sous pression de l'espace inter-parois. En particulier, en l'absence d'un tel dispositif, il est possible que la pression dans l'espace inter-parois soit trop faible pour ouvrir les vannes pneumatiques de commande du gaz. Ce problème est ici résolu.

Par ailleurs, le problème des faibles fuites de la gaine 50 est résolu ici par le seul dispositif de compensation des fuites.

Bien entendu, le dispositif automatique de pressurisation représenté à la figure 10 peut être mis en oeuvre sans le dispositif de compensation des fuites 450.

On connaît les problèmes liés à l'utilisation d'un long faisceau de conduites dont la longueur est fixe. Afin de remédier à ces problèmes, l'installation selon l'invention décrite ici comporte un faisceau 12 constitué de plusieurs éléments successifs reliés bout à bout. Ces éléments sont raccordés les uns aux autres par des raccords adaptés assurant ainsi la modularité du faisceau, qui peut être allongé en fonction des besoins.

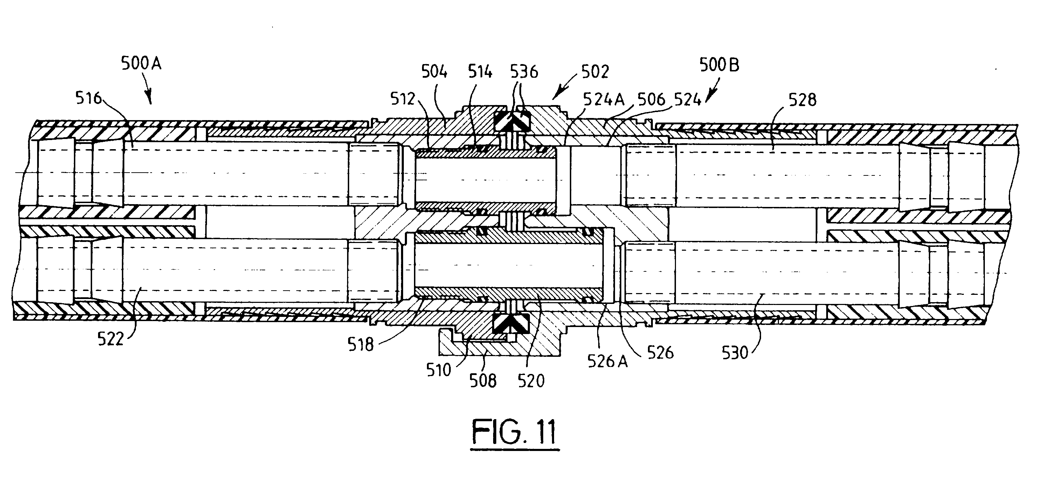

La figure 11 montre deux extrémités 500A, 500B de deux tronçons d'un faisceau reliés par un raccord rapide 502. Ce raccord rapide comporte un corps mâle 504 relié à l'extrémité 500A et un corps femelle 506 relié à l'extrémité 500B. Les corps mâle et femelle sont de forme extérieure sensiblement cylindrique.

Le corps femelle 506 comporte trois griffes de solidarisation 508, réparties sur sa périphérie. Ces griffes assurent la solidarisation du corps mâle et du corps femelle par coopération avec des saillies 510 ménagées à la périphérie du corps mâle.

Chaque corps de raccord comporte quatre perçages disposés en vis-à-vis. Un premier perçage taraudé 512 du corps mâle reçoit un manchon vissé 514 d'une première longueur, destinée au passage du gaz comburant. Le perçage 512 est prolongé par un embout 516 sur lequel est emmanché la conduite d'alimentation en gaz combustible. De même, un perçage taraudé 518 est ménagé dans le corps mâle. Ce perçage reçoit un manchon vissé 520 d'une seconde longueur différente de la longueur du manchon 514. Un embout 522 prolonge le perçage 518 afin de permettre la fixation de la conduite d'alimentation du gaz combustible. Le corps femelle comporte deux perçages 524, 526 disposés en regard des manchons 514, 520. Ces perçages comportent des suralésages 524A, 526A destinés à recevoir l'extrémité des manchons 514, 520. Les profondeurs de ces suralésages sont différentes et correspondent aux longueurs des extrémités en saillie des manchons 514 et 520. Les diamètres des manchons 514 et 520 sont tels qu'ils ne peuvent pas pénétrer dans les tronçons des perçages non élargis par le suralésage. Les perçages 524 et 526 sont prolongés par des embouts 528, 530 sur lesquels sont emmanchés les conduites d'alimentation en gaz comburant et en gaz combustible.

Par ailleurs, deux perçages complémentaires décalés angulairement de 90° par rapport aux perçages 512, 518, 524, 526 traversent les corps mâle et femelle, afin de mettre en communication les espaces inter-parois des deux tronçons de faisceau.

Des joints 536 sont disposés en vis-à-vis à la périphérie des corps mâle et femelle afin de garantir l'étanchéité du raccord. De même, les manchons 514 et 520 comportent des joints toriques assurant l'étanchéité.

On comprend qu'avec un tel raccord, la longueur du faisceau peut être facilement modifiée. Par ailleurs, de par les longueurs différentes des parties en saillie des manchons 514 et 520, et les profondeurs correspondantes des suralésages 524A et 526A, le raccord interdit la permutation des conduits d'alimentation en combustible et en oxygène. En effet, les organes de raccord des tronçons de conduites différentes sont incompatibles.

Par ailleurs, le faisceau 12 peut être incorporé dans une nappe de conduits souples d'alimentation, les autres conduits transportant par exemple de l'eau, de l'air comprimé et un gaz inerte de soudage par exemple.

## Revendications

1. Installation d'alimentation en gaz, du type comportant au moins une source (14, 16 ; 304, 306) d'alimentation en gaz, notamment en gaz combustible, reliée au moins à un dispositif utilisateur (10 ; 300), par au moins une conduite d'alimentation (46, 48 ; 310, 312) au moins partiellement disposée dans une gaine (50 ; 314, 316) étanche délimitant avec la conduite d'alimentation (46, 48, ;310, 312) un espace inter-parois (54 ; 320, 322) hermétiquement clos et empli d'un gaz de sécurité, différent du gaz d'alimentation et ayant au repos une pression différente de celle du milieu ambiant, et des moyens (22, 24 ; 308, 310), sensibles à la pression du gaz de sécurité, d'arrêt de l'écoulement issu de la source d'alimentation en gaz (14, 16 ; 304, 306), caractérisée en ce qu'elle comporte au moins un organe (60, 62) actionnable par un opérateur pour dépressuriser sélectivement l'espace inter-parois (54).

2. Installation selon la revendication 1, caractérisée en ce que ledit gaz de sécurité est un gaz inerte, notamment de l'azote.

3. Installation selon l'une quelconque des revendications précédentes, caractérisée en ce qu'elle comporte en outre au moins un clapet (44) de mise à l'air de l'espace inter-parois (54) maintenu normalement obturé par un lien en matériau fusible.

4. Installation selon l'une quelconque des revendications précédentes, caractérisée en ce que les moyens d'arrêt comportent une vanne d'arrêt pneumatique (22, 24) disposée sur la conduite d'alimentation en gaz et commandée par la pression du gaz de sécurité.

5. Installation selon l'une quelconque des revendications précédentes, caractérisée en ce qu'il est prévu des moyens (34, 36, 40, 42 ; 328, 330, 332, 334, 336, 401) de mise sous pression de l'espace inter-parois (54; 320, 322).

6. Installation selon la revendication 5, caractérisée en ce que les moyens de mise sous pression (34, 36, 40, 42 ; 328, 330, 332, 334, 336) comportent une source (36, 336) de gaz de sécurité sous pression, reliée sélectivement audit espace inter-parois (54, 320, 322).

7. Installation selon la revendication 6, caractérisé en ce que les moyens de mise sous pression de l'espace inter-parois comportent des moyens (403) automatiques de pressurisation dudit espace inter-parois (54) à une pression d'usage prédéterminée.

8. Installation selon la revendication 7, caractérisée en ce que lesdits moyens (403) automatiques de pressurisation dudit espace inter-parois à une pression d'usage prédéterminée comportent une vanne de pressurisation (416) reliant, par l'intermédiaire d'un distributeur de régulation (418) monostable à commande pneumatique, la source (36) de gaz de sécurité à l'entrée de commande d'un distributeur d'arrêt (428) monostable à commande pneumatique normalement fermé assurant la liaison sélective entre l'espace inter-parois (54) et la source (36) de gaz de sécurité, l'entrée de commande du distributeur de régulation (418) étant reliée audit espace inter-parois (54) afin de relier l'entrée de commande du distributeur d'arrêt (428) à la sortie de la vanne de pressurisation (416) lorsque la pression dans l'espace inter-parois (54) est inférieure à ladite pression d'usage prédéterminée et de mettre à l'air l'entrée de commande du distributeur d'arrêt (428) lorsque la pression dans l'espace inter-parois (54) est supérieure ou égale à ladite pression prédéterminée, assurant ainsi l'arrêt de l'écoulement du gaz de sécurité entre la source (36) et l'espace inter-parois (54).

9. Installation selon la revendication 8, caractérisée en ce que la vanne de pressurisation (416) est une vanne monostable normalement fermée, actionnable manuellement et en ce qu'un clapet anti-retour (420) est disposé entre ladite vanne de pressurisation (416) et ledit distributeur de régulation (418).

10. Installation selon la revendication 8 ou 9, caractérisée en ce qu'elle comporte un organe de commande unique (414) à deux positions pour la commande de deux vannes (404, 412), une première vanne (412) étant disposée entre la source (36) de gaz de sécurité et la vanne de pressurisation (416) et la seconde vanne (404) assurant sélectivement la mise à l'air de l'espace inter-parois (54), une première position de l'organe de commande assurant la liaison de la source (36) à la vanne de pressurisation (416), ainsi que l'isolement de l'espace inter-parois (54), une seconde position de l'organe de commande assurant l'isolement de la vanne de pressurisation (416) et de la source (36) et la mise à l'air de l'espace inter-parois (54).

11. Installation selon l'une quelconque des revendications 6 à 10, caractérisée en ce qu'elle comporte des moyens de maintien à une pression d'usage prédéterminée de l'espace inter-parois (54), comportant des moyens de liaison de la source (36) de gaz de sécurité à l'espace inter-parois (54) lorsque la pression dans ledit espace inter-parois (54) est comprise entre la pression d'usage et une pression de rupture prédéterminée, supérieure à la pression du milieu ambiant.

12. Installation selon la revendication 11, caractérisée en ce que les moyens de liaison comportent depuis la source (36) de gaz de sécurité une soupape (454) de régulation de pression à commande pneumatique réglée à ladite pression d'usage, dont l'entrée de commande est reliée à l'espace inter-parois (54) et une cellule pneumatique ET (456') calibrée pour un déclenchement à des pressions supérieures à ladite pression de rupture dont une entrée est reliée à la sortie de la soupape (454) et dont l'autre entrée est reliée audit espace inter-parois (54), la sortie de ladite cellule (456') étant reliée audit espace inter-parois.

13. Installation selon la revendication 12, caractérisée en ce qu'elle comporte un limiteur de débit réglage (458) disposé en sortie de ladite cellule (456').

14. Installation selon l'une quelconque des revendications précédentes, caractérisée en ce que la gaine (50) et ladite conduite comportent plusieurs tronçons successifs reliés les uns aux autres par des raccords démontables.

15. Installation selon l'une quelconque des revendications précédentes, comportant en outre une ou plusieurs sources complémentaires d'alimentation en gaz reliées par une ou plusieurs conduites complémentaires d'alimentation audit dispositif utilisateur ou à d'autres dispositifs utilisateurs, caractérisée en ce que la ou chaque conduite complémentaire d'alimentation est au moins partiellement disposée dans ladite gaine (50) et en ce qu'il est prévu des moyens d'arrêt de l'écoulement issu de chaque source d'alimentation en gaz, chacun de ces moyens d'arrêt étant commandés par ledit gaz de sécurité.

16. Installation selon les revendications 14 et 15 prises ensemble, caractérisée en ce que les raccords démontables comportent, pour chaque conduite, disposés dans la gaine (50), des organes de raccord (514, 520) différents, et non compatibles entre eux, interdisant la liaison de deux tronçons de conduites différentes.

17. Installation selon l'une quelconque des revendications 1 à 3, caractérisée en ce que les moyens d'arrêt comportent un détendeur à arrêt et réglage pneumatiques (308, 310) commandé par la pression du gaz de sécurité contenu dans l'espace inter-parois (320, 322), et en ce qu'il est prévu des moyens (328, 330) de réglage de la pression du gaz de sécurité dans cet espace inter-parois (320, 322).

18. Installation selon la revendication 17, caractérisée en ce que les moyens de réglage de la pression comportent une source (366) de gaz de sécurité sous pression et un distributeur (328, 330) isolant, au repos, l'espace inter-parois (320, 322) et reliant sélectivement celui-ci au milieu ambiant ou à ladite source (366) de gaz de sécurité, afin de régler la pression du gaz de sécurité.

19. Equipement de mise en oeuvre d'une flamme, comportant un brûleur, notamment un chalumeau, alimenté par deux gaz, dont l'un au moins provient d'une installation d'alimentation en gaz dudit brûleur selon l'une quelconque des revendications précédentes.

20. Détendeur à réglage manuel et arrêt pneumatique, notamment pour une installation selon l'une quelconque des revendications 1 à 16, comportant une chambre (120 ; 190) d'entrée de gaz sous une haute pression reliée à une chambre (134 ; 194) de sortie de gaz détendu sous une basse pression par un conduit (126) de liaison associé à un pointeau (131 ; 193) d'obturation partielle ou totale de celui-ci, lequel pointeau (131 ; 193) est chargé par un ressort (160 ; 200) associé à des moyens (156, 158, 162 ; 204, 206, 202) de réglage manuel de sa raideur et dont une extrémité prend appui sur une paroi mobile (138 ; 196) de la chambre (134 ; 194) de sortie, cette paroi étant interposée entre le ressort (160 ; 200) et le pointeau (131 ; 193), et une chambre de commande (146 ; 170) associée à des moyens (131 ; 180) d'arrêt de l'écoulement commandés par une pression de commande régnant dans cette chambre.

21. Détendeur selon la revendication 20, caractérisé en ce que les moyens de réglage manuel de la raideur du ressort (160) comportent une tige filetée (156) reçue dans un trou taraudé (154) d'une paroi mobile (150) de la chambre de commande (146), ladite tige (156) coopérant avec une extrémité du ressort (160) pour comprimer celui-ci, de sorte que, en fonction du déplacement de la paroi mobile (150) de la chambre de commande (146) sous l'effet de la pression de commande régnant dans celle-ci, le ressort (160) agit sur le pointeau (131) pour commander l'arrêt ou l'ouverture du détendeur de manière pneumatique.

22. Détendeur selon la revendication 20, caractérisé en ce que les moyens de réglage manuel de la raideur du ressort comportent une tige filetée (204) reçue dans un trou taraudé (208) du corps du détendeur et adaptée pour comprimer le ressort (200), et en ce que les moyens d'arrêt de l'écoulement (180) sont disposés en amont de la chambre d'entrée (190).

## Patentansprüche

1. Gaszufuhrvorrichtung der Art bestehend aus mindestens einer Quelle (14, 16; 304, 306) für die Zufuhr eines Gases, insbesondere eines brennbaren Gases, die über mindestens eine Zufuhrleitung (46, 48; 310, 312), die mindestens teilweise in einem dichten Mantel (50; 314, 316) angeordnet ist, der mit der Zufuhrleitung (46, 48; 310, 312) einen Wandzwischenraum (54; 320, 322) begrenzt, welcher hermetisch abgeschlossen und mit einem von dem Zufuhrgas verschiedenen Sicherheitsgas gefüllt ist, das im Ruhezustand unter einem von dem des umgebenden Milieus verschiedenen Druck steht, mit mindestens einer Verbrauchereinheit (10; 300) verbunden ist, und aus auf den Druck des Sicherheitsgases reagierenden Mitteln (22, 24; 308, 310) zum Rückhalten der von der Gaszufuhrquelle (14, 16; 304, 306) kommenden Strömung, dadurch gekennzeichnet, daß sie mindestens ein von einem Bediener betätigbares Organ (60, 62) zur selektiven Entspannung des Wandzwischenraums (54) enthält.

2. Vorrichtung nach Anspruch 1, dadurch gekennzeichnet, daß besagtes Sicherheitsgas ein Inertgas, insbesondere Stickstoff, ist.

3. Vorrichtung nach einem der vorhergehenden Ansprüche, dadurch gekennzeichnet, daß sie ferner mindestens eine Klappe (44) zum Entgasen des Wandzwischenraums (54) aufweist, der normalerweise durch ein Verbindungsstück aus schmelzbarem Material abgesperrt ist.

4. Vorrichtung nach einem der vorhergehenden Ansprüche, dadurch gekennzeichnet, daß die Rückhaltemittel ein pneumatisches Rückhalteventil (22, 24) umfassen, das auf der Gaszufuhrleitung angeordnet ist und vom Druck des Sicherheitsgases gesteuert wird.

5. Vorrichtung nach einem der vorhergehenden Ansprüche, dadurch gekennzeichnet, daß Mittel (34, 36, 40, 42; 328, 330, 332, 334, 336, 401) vorgesehen sind, um den Wandzwischenraum (54; 320, 322) unter Druck zu setzen.

6. Vorrichtung nach Anspruch 5, dadurch gekennzeichnet, daß die Mittel zur Unterdrucksetzung (34, 36, 40, 42; 328, 330, 332, 334, 336) eine Sicherheitsgasquelle (36, 336) unter Druck umfassen, die selektiv mit besagtem Wandzwischenraum (54, 320, 322) verbunden ist.

7. Vorrichtung nach Anspruch 6, dadurch gekennzeichnet, daß die Mittel zur Unterdrucksetzung des Wandzwischenraums automatische Mittel (403) umfassen, um besagten Wandzwischenraum (54) unter einen vorbestimmten Betriebsdruck zu setzen.

8. Vorrichtung nach Anspruch 7, dadurch gekennzeichnet, daß besagte automatische Mittel (403) zur Unterdrucksetzung des besagten Wandzwischenraums auf einen vorbestimmten Betriebsdruck ein Unterdrucksetzungsventil (416) umfassen, das über einen monostabilen, pneumatisch gesteuerten Regelverteiler (418) die Sicherheitsgasquelle (36) mit dem Steuereingang eines monostabilen, pneumatisch gesteuerten, normalerweise geschlossenen Absperrverteilers (428) verbindet, was die selektive Verbindung zwischen dem Wandzwischenraum (54) und der Sicherheitsgasquelle (36) sicherstellt, wobei der Steuereingang des Regelverteilers (418) mit besagtem Wandzwischenraum (54) verbunden ist, um den Steuereingang des Absperrverteilers (428) mit dem Ausgang des Unterdrucksetzungsventils (416) zu verbinden, wenn der Druck im Wandzwischenraum (54) niedriger ist als der besagte vorbestimmte Betriebsdruck, und den Steuereingang des Absperrverteilers (428) zu entgasen, wenn der Druck im Wandzwischenraum (54) größer als oder gleich dem besagten vorbestimmten Druck ist, wodurch die Absperrung der Sicherheitsgasströmung zwischen der Quelle (36) und dem Wandzwischenraum (54) sichergestellt wird.

9. Vorrichtung nach Anspruch 8, dadurch gekennzeichnet, daß das Unterdrucksetzungsventil (416) ein monostabiles, normalerweise geschlossenes, von Hand betätigbares Ventil ist und daß zwischen besagtem Unterdrucksetzungsventil (416) und besagtem Regelverteiler (418) eine Rückschlagklappe (420) angeordnet ist.

10. Vorrichtung nach Anspruch 8 oder 9, dadurch gekennzeichnet, daß sie ein einziges Steuerorgan (414) mit zwei Stellungen zur Steuerung der beiden Ventile (404, 412) enthält, wobei ein erstes Ventil (412) zwischen der Sicherheitsgasquelle (36) und dem Unterdrucksetzungsventils (416) angeordnet ist und das zweite Ventil (404) selektiv die Entgasung des Wandzwischenraums (54) sicherstellt, wobei eine erste Stellung des Steuerorgans die Verbindung der Quelle (36) mit dem Unterdrucksetzungsventil (416) sowie auch die Isolierung des Wandzwischenraums (54) und eine zweite Stellung des Steuerorgans die Isolierung des Unterdrucksetzungsventils (416) und der Quelle (36) und die Entgasung des Wandzwischenraums (54) sicherstellt.

11. Vorrichtung nach einem der Ansprüche 6 bis 10, dadurch gekennzeichnet, daß sie Mittel zur Aufrechterhaltung eines vorbestimmten Betriebsdrucks im Wandzwischenraum (54) enthält, die Mittel zum Verbinden der Sicherheitsgasquelle (36) mit dem Wandzwischenraum (54) umfassen, wenn der Druck in besagtem Wandzwischenraum (54) zwischen dem Betriebsdruck und einem vorbestimmten Berstdruck, der höher ist als der Umgebungsdruck, liegt.

12. Vorrichtung nach Anspruch 11, dadurch gekennzeichnet, daß die Verbindungsmittel nach der Sicherheitsgasquelle (36) ein pneumatisch gesteuertes, auf besagten Betriebsdruck eingestelltes Druckregelventil (454) enthalten, dessen Steuereingang mit dem Wandzwischenraum (54) und einer pneumatischen UND-Zelle (456') verbunden ist, die zur Auslösung bei höheren Drücken als besagtem Berstdruck kalibriert ist und von der ein Eingang mit dem Ausgang des Ventils (454) und der andere Eingang mit besagtem Wandzwischenraum (54) verbunden ist, wobei der Ausgang der besagten Zelle (456') mit besagtem Wandzwischenraum verbunden ist.

13. Vorrichtung nach Anspruch 12, dadurch gekennzeichnet, daß sie einen Regeldurchsatzbegrenzer (458) enthält, der am Ausgang der besagten Zelle (456') angeordnet ist.

14. Vorrichtung nach einem der vorhergehenden Ansprüche, dadurch gekennzeichnet, daß der Mantel (50) und die besagte Leitung mehrere aufeinanderfolgende Abschnitte enthalten, die miteinander über abnehmbare Kuppelstücke verbunden sind.

15. Vorrichtung nach einem der vorhergehenden Ansprüche, ferner enthaltend eine oder mehrere zusätzliche Gaszufuhrquellen, die über eine oder mehrere zusätzliche Zufuhrleitungen mit besagter Verbrauchereinheit oder anderen Verbrauchereinheiten verbunden sind, dadurch gekennzeichnet, daß die bzw. jede zusätzliche Zufuhrleitung zumindest teilweise innerhalb des besagten Mantels (50) angeordnet ist und daß Absperrmittel für die von jeder Gaszufuhrquelle kommende Strömung vorgesehen sind, wobei diese Absperrmittel jeweils durch besagtes Sicherheitsgas gesteuert werden.

16. Vorrichtung nach den Ansprüchen 14 und 15 zusammengenommen, dadurch gekennzeichnet, daß die abnehmbaren Kuppelstücke für jede innerhalb des Mantels (50) angeordnete Leitung unterschiedliche und miteinander unverträgliche Kuppelorgane (514, 520) enthalten, welche die Verbindung von zwei Abschnitten unterschiedlicher Leitungen verbieten.

17. Vorrichtung nach einem der Ansprüche 1 bis 3, dadurch gekennzeichnet, daß die Absperrmittel ein durch den Druck des im Wandzwischenraum (320, 322) enthaltenen Sicherheitsgases gesteuertes Reduzierventil (308, 310) zur pneumatischen Absperrung und Regelung enthalten und daß Mittel (328, 330) zur Regelung des Sicherheitsgasdrucks in diesem Wandzwischenraum (320, 322) vorgesehen sind.

18. Vorrichtung nach Anspruch 17, dadurch gekennzeichnet, daß die Mittel zur Druckregelung eine Quelle (366) für unter Druck stehendes Sicherheitsgas und einen Verteiler (328, 330) enthalten, der im Ruhezustand den Wandzwischenraum (320, 322) isoliert und diesen selektiv mit dem umgebenden Milieu oder der besagten Sicherheitsgasquelle (366) verbindet, um den Druck des Sicherheitsgases zu regulieren.

19. Ausrüstung zum Betrieb einer Flamme, umfassend einen Brenner, insbesondere einen Schweißbrenner, der durch zwei Gase versorgt wird, von denen mindestens ein Gas aus einer Vorrichtung für die Zufuhr von Gas zu dem besagten Brenner gemäß einem der vorhergehenden Ansprüche kommt.

20. Reduzierventil mit manueller Regelung und pneumatischer Absperrung, insbesondere für eine Vorrichtung gemäß einem der Ansprüche 1 bis 16, umfassend eine Eingangskammer (120; 190) für Hochdruckgas, die mit einer Ausgangskammer (134; 194) für entspanntes Gas unter niedrigem Druck über eine Verbindungsleitung (126) verbunden ist, die mit einer Nadel (131; 193) für deren partielle oder vollständige Schließung zusammenwirkt, wobei diese Nadel (131; 193) durch eine Feder (160; 200) belastet ist, die Mitteln (156, 158, 162; 204, 206, 202) zur manuellen Regelung ihrer Härte unterliegt und von der ein Ende auf einer beweglichen Wand (138; 196) der Ausgangskammer (134; 194) abgestützt ist, wobei diese Wand zwischen der Feder (160; 200) und der Nadel (131; 193) eingesetzt ist, sowie eine Steuerkammer (146; 170), die mit Mitteln (131; 180) zur Absperrung der Strömung versehen ist, die durch einen in dieser Kammer herrschenden Steuerdruck gesteuert werden.

21. Reduzierventil nach Anspruch 20, dadurch gekennzeichnet, daß die Mittel zur manuellen Regelung der Härte der Feder (160) einen in einem Loch mit Innengewinde (154) in einer beweglichen Wand (150) der Steuerkammer (146) aufgenommenen Gewindestift (156) umfassen, der mit einem Ende der Feder (160) zu deren Zusammendrücken in solcher Weise zusammenwirkt, daß als Funktion der Verschiebung der beweglichen Wand (150) der Steuerkammer (146) unter der Einwirkung des in dieser herrschenden Steuerdrucks die Feder (160) die Nadel (131) zur Schließung oder Öffnung des Reduzierventils auf pneumatischem Weg betätigt.

22. Reduzierventil nach Anspruch 20, dadurch gekennzeichnet, daß die Mittel zur manuellen Regelung der Härte der Feder einen in einem Loch mit Innengewinde (208) im Körper des Reduzierventils aufgenommenen Gewindestift (204) umfassen, der zum Zusammendrücken der Feder (200) bestimmt ist, und daß die Mittel zur Absperrung der Strömung (180) stromaufwärts der Eingangskammer (190) angeordnet sind.

## Claims

1. Gas supply unit, of the type comprising at least one source (14, 16; 304, 306) for supplying gas, especially fuel gas, connected to at least one user device (10; 300) via at least one supply pipe (46, 48; 301, 312) at least partly lying in a sealed sheath (50; 314, 316) which defines, together with the supply pipe (46, 48; 310, 312) a hermetically sealed inter-wall space (54; 320, 322) filled with a safety gas, differing from the supply gas and having, when not in use, a pressure different from that of the ambient atmosphere, and means (22, 24; 308, 310), sensitive to the pressure of the safety gas, for shutting off the flow coming from the gas supply source (14, 16; 304, 306), characterized in that it includes at least one device (60, 62) which can be actuated by an operator in order to selectively depressurize the inter-wall space (54).

2. Unit according to Claim 1, characterized in that the said safety gas is an inert gas, especially nitrogen.

3. Unit according to any one of the preceding claims, characterized in that it furthermore includes at least one valve (44) for venting the inter-wall space (54) normally kept closed off by a link made of fusible material.

4. Unit according to any one of the preceding claims, characterized in that the shut-off means comprise a pneumatic shut-off valve (22, 24) placed in the gas supply pipe and controlled by the pressure of the safety gas.

5. Unit according to any one of the preceding claims, characterized in that means (34, 36, 40, 42; 328, 330, 332, 334, 336, 401) are provided for pressurizing the inter-wall space (54; 320, 322).

6. Unit according to Claim 5, characterized in that the pressurizing means (34, 36, 40, 42; 328, 330, 332, 334, 336) include a source (36, 336) of pressurized safety gas, connected selectively to the said inter-wall space (54, 320, 322).

7. Unit according to Claim 6, characterized in that the means for pressurizing the inter-wall space include automatic means (403) for pressurizing the said inter-wall space (54) to a predetermined operating pressure.

8. Unit according to Claim 7, characterized in that the said means (403) for automatically pressurizing the said inter-wall space to a predetermined operating pressure include a pressurizing valve (416) which connects the safety gas source (36), via a pneumatically controlled monostable regulating distributor (418) to the control inlet of a normally closed pneumatically operated monostable shut-off distributor (428) allowing selective connection between the inter-wall space (54) and the safety gas source (36), the control inlet of the regulating distributor (418) being connected to the said inter-wall space (54) so as to connect the control inlet of the shut-off distributor (428) to the outlet of the pressurizing valve (416) when the pressure in the inter-wall space (54) is less than the said predetermined operating pressure and to vent the control inlet of the shut-off distributor (428) when the pressure in the inter-wall space (54) is greater than or equal to the said predetermined pressure, thus ensuring that the flow of the safety gas between the source (36) and the inter-wall space (54) is shut off.

9. Unit according to Claim 8, characterized in that the pressurizing valve (416) is a manually operated, normally closed monostable valve and in that a non-return valve (420) is placed between the said pressurizing valve (416) and the said regulating distributor (418).

10. Unit according to Claim 8 or 9, characterized in that it includes a single two-position control device (414) for controlling two valves (404, 412), a first valve (412) being placed between the safety gas source (36) and the pressurizing valve (416), and the second valve (404) ensuring that the inter-wall space (54) is selectively vented, a first position of the control device ensuring that the source (36) is connected to the pressurizing valve (416) and that the inter-wall space (54) is isolated, a second position of the control device ensuring that the pressurizing valve (416) and the source (36) are isolated and that the inter-wall space (54) is vented.

11. Unit according to any one of Claims 6 to 10, characterized in that it includes means for maintaining a predetermined operating pressure in the inter-wall space (54), having means for connecting the safety gas source (36) to the inter-wall space (54) when the pressure in the said inter-wall space (54) is between the operating pressure and a predetermined burst pressure greater than the pressure of the ambient atmosphere.

12. Unit according to Claim 11, characterized in that the connection means include, from the safety gas source (36), a pneumatically controlled pressure-regulating valve (454) set to the said operating pressure, the control inlet of which is connected to the inter-wall space (54), and a pneumatic AND cell (456') set to trip at pressures greater than the said burst pressure, one inlet of which is connected to the outlet of the valve (454) and the other inlet of which is connected to the said inter-wall space (54), the outlet of the said cell (456') being connected to the said inter-wall space.

13. Unit according to Claim 12, characterized in that it includes an adjustable flow limiter (458) placed on the outlet side of the said cell (456').

14. Unit according to any one of the preceding claims, characterized in that the sheath (50) and the said pipe are composed of several successive sections connected to each other by removable fittings.

15. Unit according to any one of the preceding claims, which furthermore includes one or more additional gas supply sources connected via one or more additional supply pipes to the said user device or to other user devices, characterized in that the or each additional supply pipe lies at least partly in the said sheath (50) and in that means are provided for shutting off the flow coming from each gas supply source, each of these shut-off means being controlled by the said safety gas.

16. Unit according to Claims 14 and 15 taken together, characterized in that the removable fittings comprise, for each pipe, placed in the sheath (50), different fittings (514, 520), which are not mutually compatible, preventing two sections of different pipes from being connected together.

17. Unit according to any one of Claims 1 to 3, characterized in that the shut-off means comprise a pneumatic shut-off pressure regulator (308, 310) which is pneumatically adjustable and is controlled by the pressure of the safety gas contained in the inter-wall space (320, 322) and in that means (328, 330) are provided for adjusting the pressure of the safety gas in this inter-wall space (320, 322).

18. Unit according to Claim 17, characterized in that the means for adjusting the pressure comprise a pressurized safety gas source (366) and a distributor (328, 330) which isolates, when it is not in use, the inter-wall space (320, 322) and selectively connects the latter to the ambient atmosphere or to the said safety gas source (366), so as to adjust the pressure of the safety gas.

19. Equipment for using a flame, comprising a burner, especially a torch, fed with two gases, at least one of which comes from a unit according to any one of the preceding claims for supplying the said burner with gas.

20. Manually adjustable pneumatic shut-off pressure regulator, especially for a unit according to any one of Claims 1 to 16, comprising an inlet chamber (120; 190) for gas at a high pressure connected via a connecting duct (126) to an outlet chamber (134; 194) for gas reduced to a low pressure, the connecting duct being associated with a needle (131; 193) for partially or completely closing off the latter, which needle (131; 193) is loaded by a spring (160; 200) associated with means (156, 158, 162; 204, 206, 202) for manually adjusting its stiffness and one end of which spring bears on a moveable wall (138; 196) of the outlet chamber (134; 194), this wall being interposed between the spring (160; 200) and the needle (131; 193), and a control chamber (146; 170) associated with means (131; 180) for shutting off the flow, these means being controlled by a control pressure within this chamber.

21. Pressure regulator according to Claim 20, characterized in that the means for manually adjusting the stiffness of the spring (160) include a threaded rod (156) which is housed in a tapped hole (154) in a moveable wall (150) of the control chamber (146), the said rod (156) engaging with one end of the spring (160) in order to compress the latter, so that, depending on the movement of the moveable wall (150) of the control chamber (146) under the effect of the control pressure within the latter, the spring (160) acts on the needle (131) in order to cause the pressure regulator to be shut off or opened pneumatically.

22. Pressure regulator according to Claim 20, characterized in that the means for manually adjusting the stiffness of the spring include a threaded rod (204) which is housed in a tapped hole (208) in the body of the pressure regulator and is designed to compress the spring (200), and in that the means (180) for shutting off the flow are placed upstream of the inlet chamber (190).
